# EUROPEAN PATENT SPECIFICATION

(11) **EP 1 454 732 B1**
(45) Date of publication and mention of the grant of the patent: **14.02.2007**
(21) Application number: 02777947.9
(22) Date of filing: 24.10.2002
(51) Int. Cl.: B29C 47/04, B29D 30/06, B29C 47/06, B29D 30/16, B29D 30/30, B60C 5/14

(54) **PRODUCTION METHOD FOR UNVULCANIZED RUBBER MEMBER AND TIRE**
HERSTELLUNGSVERFAHREN FÜR NICHT VULKANISIERTE KAUTSCHUKELEMENTE UND REIFEN
PROCEDE DE PRODUCTION D'UN ELEMENT EN CAOUTCHOUC NON VULCANISE ET D'UN BANDAGE

(30) Priority: 12.11.2001 JP 2001345540; 26.12.2001 JP 2001394278
(43) Date of publication of application: 08.09.2004
(73) Proprietor: Bridgestone Corporation, Tokyo 104-8340 (JP)
(72) Inventor: SHIRASAKA, Jingo, BRIDGESTONE CORP. TECH. CENTER, Kodaira-shi, Tokyo 187-8531 (JP); YAMADA, Tsuguyoshi, BRIDGESTONE CORP. TECH CENTER, Kodaira-shi, Tokyo 187-8531 (JP); WADA, Ichiro, BRIDGESTONE CORP. TECH. CENTER, Kodaira-shi, Tokyo 187-8531 (JP)
(74) Representative: Whalley, Kevin
(86) International application number: PCT/JP2002/011048
(87) International publication number: WO 2003/041941

(56) References cited:
- EP-A- 0 485 127
- EP-A- 0 970 797
- EP-A- 1 106 335
- EP-A2- 0 970 797
- JP-A- 2 212 134
- JP-A- 5 017 641
- JP-A- 9 052 273
- JP-A- 2002 144 398
- US-A- 4 548 568
- US-A- 5 158 627
- US-A- 5 221 406
- US-A- 5 824 170
- US-A1- 4 963 207
- PATENT ABSTRACTS OF JAPAN vol. 1997, no. 06, 30 June 1997 (1997-06-30) & JP 09 052273 A (FUJIKURA LTD), 25 February 1997 (1997-02-25)
- PATENT ABSTRACTS OF JAPAN vol. 1999, no. 05, 31 May 1999 (1999-05-31) & JP 11 035754 A (BRIDGESTONE CORP), 9 February 1999 (1999-02-09)
- PATENT ABSTRACTS OF JAPAN vol. 1999, no. 04, 30 April 1999 (1999-04-30) & JP 11 011106 A (SUMITOMO RUBBER IND LTD), 19 January 1999 (1999-01-19)
- PATENT ABSTRACTS OF JAPAN vol. 1998, no. 03, 27 February 1998 (1998-02-27) & JP 09 296078 A (YOKOHAMA RUBBER CO LTD:THE), 18 November 1997 (1997-11-18)
- PATENT ABSTRACTS OF JAPAN vol. 1996, no. 01, 31 January 1996 (1996-01-31) & JP 07 237405 A (TOYO TIRE & RUBBER CO LTD), 12 September 1995 (1995-09-12)

## Description

This invention relates to a process for producing an uncured rubber member and more particularly to a process for producing an uncured rubber member in which two or more kinds of uncured rubber compositions are separately extruded and wound on a rotating support.

In general, a composite having various rubbers is required to take such a step that various uncured rubber members are stuck before vulcanization in the production of the composite. When the composite is a pneumatic tire (hereinafter referred to as a tire), the tire is comprised of reinforcing members such as organic fiber or steel cords and various rubber members. Therefore, an uncured tire formed by sticking uncured rubber members and reinforcing members such as cords and the like is provided at a shaping step before the vulcanization of the tire.

At present, performances required for the rubber composites inclusive of the tires tend to be more upgraded and diversified. For this end, the shaping step becomes naturally complicated and manual operation is still required. However, a big improvement of shaping efficiency can not be attained, and also there is a problem that a sticking accuracy of various members lowers. In the case of the tire, improvement of the sticking accuracy is strongly demanded in addition to improvement of the shaping efficiency because good or bad sticking accuracy particularly controls the quality of the tire.

In order to meet the above demand, JP-B-7-94155 (US-5221406A) proposes a process and an apparatus wherein an outlet orifice of a constant delivery extruder is located in the vicinity of a position for arranging a rubber member on a rotating support and a rubber composition is directly extruded from the constant delivery extruder through the outlet orifice onto the support. Also, JP-A-2000-79643 (EP-0970797A) proposes a process and an apparatus wherein plural rubber compositions are directly extruded onto the support through a single extruding device with mixing.

In the extrusion methods described in the above publications, however, if the extrusion rate is made faster for increasing the shaping efficiency, there is a problem that heat build-up of the rubber composition is caused by friction in the extruder to cause scorching (phenomenon of causing vulcanization at an unanticipated time). On the contrary, if it is intended to reduce the friction in the extruder by making the extrusion rate slow, there is a problem of lowering the shaping efficiency. Therefore, these methods are not an effective solution.

Further, when the vulcanization rate is made slow by selecting the kind of vulcanization accelerator or by decreasing amounts of vulcanizing agent (sulfur) and vulcanization accelerator, scorching hardly occurs, but there is a problem that it is required to prolong the vulcanization time.

It is an object of the present invention to provide a process for producing an uncured rubber member without causing scorching at a shaping step and with a high building efficiency.

The present invention provides a process for producing an uncured rubber member, which comprises separately producing a rubber composition A of a compounding system excluding a vulcanizing agent and a rubber composition B of a compounding system excluding a vulcanization accelerator, and shaping the rubber composition A and the rubber composition B into respective desired forms in a shaping machine to wind on a rotating support.

Preferred features of the present invention are as follows:
- said shaping machine is an extruder.
- the form of the rubber composition A and/or B after the shaping is any one of a sheet, a ribbon and a string.
- the rubber composition A and/or B after the shaping is helically wound.
- the rubber compositions A and B are cooled before the winding on the rotating support.
- an existing ratio of the rubber composition A to the rubber composition B in the uncured rubber member is adequately changed.
- an existing ratio of the rubber composition A to the rubber composition B in the uncured rubber member is adequately changed in a widthwise direction of the support.

The invention will be further described with reference to the accompanying drawings, wherein
FIG. 1 is a partial section view illustrating a winding state of a rubber composition in the production process of an uncured rubber member according to the invention.
FIG. 2 is a schematic view of a production apparatus.

The process for producing the uncured rubber member according to the invention will be described in detail below. Heretofore, the uncured rubber composition contained a reinforcing agent, a softening agent, an activator, an antioxidant, a work-improving agent, a vulcanizing agent and a vulcanization accelerator in addition to a starting rubber. After the uncured rubber composition is shaped into a desired form, or after the uncured rubber composition after the shaping is stuck on a reinforcing material such as cords or the like to form an uncured rubber member, the uncured rubber composition is vulcanized by heating to form a member having a sufficient strength. Therefore, if heat is applied to the uncured rubber composition by friction or the like at, for example, a shaping step before the vulcanization step, since the composition contains the vulcanizing agent and vulcanization accelerator, there is a possibility of causing unanticipated scorching.

On the contrary, in the production process of the uncured rubber member according to the invention, there are separately prepared a rubber composition A obtained by excluding the vulcanizing agent from the above conventional compounding system and a rubber composition B obtained by excluding the vulcanization accelerator from the above conventional compounding system. Therefore, the rubber composition A and the rubber composition B do not contain either the vulcanizing agent or the vulcanization accelerator, respectively, so that scorching is not caused at the shaping step even if heat is generated by friction.

In the production process of the uncured rubber member according to the invention, SBR, NR, BR, butyl rubber and the like are mentioned as a starting rubber used in the rubber composition. These starting rubbers may be used alone or in a blend of two or more. As the reinforcing agent are mentioned carbon black, silica and the like. As the vulcanizing agent, vulcanization accelerator and other additives, use may be made of any substances usually used in the rubber industry. Since thiurams among the vulcanization accelerators are vulcanizable alone, however, they are excluded from the application to the rubber compositions A and B.

When an uncured rubber member is produced by using a rubber composition of the aforementioned conventional compounding system, once scorching is caused in the shaping machine, there are problems that the shaping machine should be disassembled to clean up the inside of the machine. The scorching may also be a cause of further problems of the machine. On the contrary, according to the invention, there are provided plural shaping machines, and rubber compositions each being not vulcanizable, i.e. a rubber composition A of a compounding system excluding a vulcanizing agent and a rubber composition B of a compounding system excluding a vulcanization accelerator are separately fed to the shaping machine and extruded therefrom, so that even if heat is generated by friction in the shaping machine, the occurrence of scorching can be avoided, and hence the conventional problems such as disassembling and cleaning of the machine due to the occurrence of the scorching can be solved.

In the production method of the uncured rubber member according to the invention, the occurrence of scorching can be prevented as mentioned above, so that it is possible to shape these rubber compositions A and B from the plural shaping machines at extrusion rates sufficient to their machine capacities and the production efficiency in the shaping can be largely improved. Also, it is not required to adopt means for decreasing the compounding amounts of the vulcanizing agent and the vulcanization accelerator, so that there is not caused a problem of taking a long vulcanization time.

In the production method of the uncured rubber member according to the invention, the rubber composition A and the rubber composition B are shaped separately and wound on the support, so that the thus shaped uncured rubber members are rendered into a rubber composition curable in a subsequent vulcanization step. Therefore, it is possible to vulcanize both the rubber compositions as the thermal diffusion of the vulcanizing agent/vulcanization accelerator is produced by heating at the vulcanization step.

In order to conduct sufficient thermal diffusion, it is preferable that each of the rubber compositions A and B contains an amount of the vulcanizing agent or the vulcanization accelerator sufficient to compensate for its primary compounding. Particularly, it is preferable that the rubber composition A contains a double amount of the vulcanization accelerator, while the rubber composition B contains a double amount of the vulcanizing agent.

Considering the thermal diffusion distance of the vulcanizing agent/vulcanization accelerator, the thickness of the shaped body of each rubber composition is preferably not more than 2 mm. Also, it is difficult to completely overlap these rubber compositions with each other in the winding, but the overlapping shift is preferably not more than 2 mm because there is no problem unless the above shift is within a range of conducting the thermal diffusion of the vulcanizing agent/vulcanization accelerator.

Since the crosslinkable rubber compositions are formed by the thermal diffusion of the vulcanizing agent/vulcanization accelerator at the vulcanization step in the production method of the uncured rubber member according to the invention, if the shaped bodies of the two rubber compositions are contacted at a fairly high temperature state just after the extrusion through the shaping machine, thermal diffusion of the vulcanizing agent/vulcanization accelerator is caused and hence there is a danger of starting vulcanization (crosslinking). For this end, it is preferable that the shaped body of the rubber composition is rapidly cooled to about 90°C, preferably not higher than 70°C before the winding of the shaped body onto the support.

In the production method of the uncured rubber member according to the invention, after the rubber compositions are extruded and shaped through the shaping machine such as an extruder, the shaped bodies of these rubber compositions are wound on the support. In this case, the form of the rubber composition after the shaping is not particularly restricted and it can be made into any desired form, and may be any one of sheet, ribbon, string and the like.

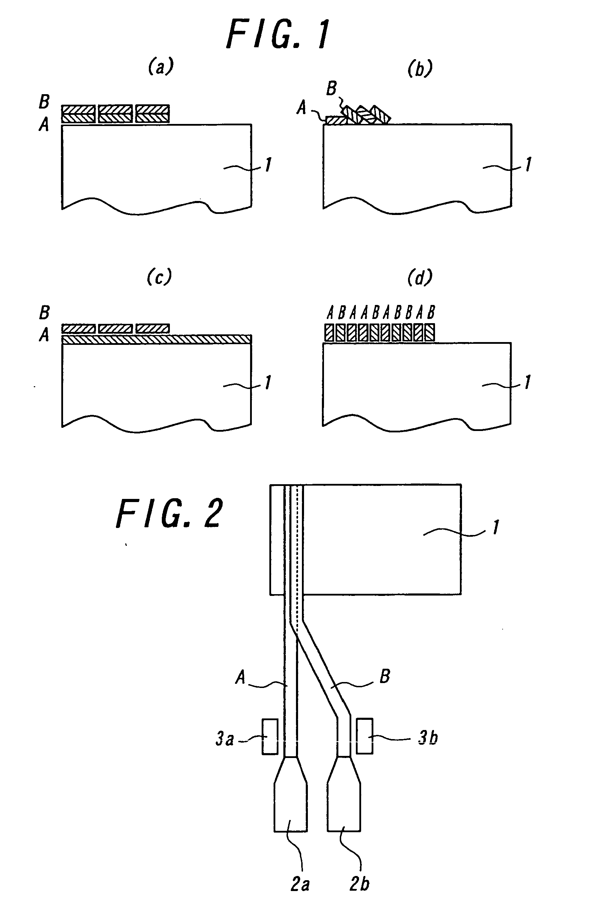

As the winding method, helical winding is preferable, but is not limited in accordance with the form of the shaped body. For example, there are helical winding of flat-shaped laminates as shown in FIG. 1(a), helical slant winding as shown in FIG. 1(b), helical winding of a ribbon-shaped body on a sheet-shaped body as shown in FIG. 1(c), helical winding of shaped bodies laminated vertically to an outer peripheral face of the support, and the like.

As the shaping machine used for extruding the rubber composition in the production method of the uncured rubber member according to the invention, mention may be made of an extruder and the like. By using plural shaping machines, the rubber composition A and the rubber composition B can be separately wound on the support.

In the production method of the uncured rubber member according to the invention, the existing ratio of the rubber compositions A and B in the uncured rubber member made of these rubber compositions can be properly changed in the uncured rubber member. As the changing method, there are a method of changing a thickness ratio of the shaped bodies of the rubber compositions A and B, a method of changing the winding number of either shaped body and the like.

Further, in the production method of the uncured rubber member according to the invention, the existing ratio of the rubber compositions A and B along the widthwise direction of the support, in the uncured rubber member, can be properly changed. Such a changing can be realized, for example, by properly forming a dense portion of the rubber composition A or B and a loose portion of the rubber composition A or B as shown in FIG. 1 (d).

Next, an embodiment of an apparatus for producing the uncured rubber member according to the invention is explained in detail with reference to FIG. 2. In FIG. 2, a support 1 is attached to a shaft rotating through the driving of a rotation driving source (not shown). The support 1 is a shaping drum, a last-off shaped body made by winding a part of uncured rubber members, cords coated with an uncured rubber and the like on the shaping drum, a base tire for retreading or the like.

The apparatus is provided with plural extruders, two extruders 2a, 2b in the embodiment of FIG. 2. The rubber composition A is extruded through the extruder 2a and the rubber composition B is extruded through the extruder 2b, and the shaped bodies A and B thereof are wound on the support 1.

In this case, if the two shaped bodies A and B of the rubber compositions contact with each other at a fairly higher temperature state just after the extrusion as previously mentioned, there is a danger that thermal diffusion of vulcanizing agent/vulcanization accelerator is caused to start the vulcanization, so that it is preferable to provide cooling devices 3a and 3b for rapidly cooling the shaped bodies A and B of the rubber compositions extruded through the extruders to about 90°C, preferably not higher than 70°C before the winding of these shaped bodies on the support 1. The cooling devices 3a and 3b are disposed between the extruders 2a and 2b and the support 1.

The following examples are given in illustration of the invention and are not intended as limitations thereof.

### Example 1

A rubber composition A excluding a vulcanizing agent and a rubber composition B excluding a vulcanization accelerator are prepared according to a compounding recipe shown in Table 1. Then, the rubber composition A and the rubber composition B are separately extruded through extruders 2a and 2b in the apparatus shown in FIG. 2 and wound on a rotating support 1 to form uncured rubber members.

### Comparative Example 1

The conventional rubber composition C is prepared according to the compounding recipe of Table 1. Then, it is extruded through a single extruder and wound on the rotating support 1 to form an uncured rubber member.

**Table 1**

| (parts by weight) | | | |
|---|---|---|---|
| | Rubber composition A | Rubber composition B | Rubber composition C |
| SBR#1500 *1 | 100 | 100 | 100 |
| Carbon black (ISAF) | 50 | 50 | 50 |
| Process oil | 10 | 10 | 10 |
| Zinc oxide | 5 | 5 | 5 |
| TBBS (vulcanization accelerator) *2 | 2 | 0 | 1 |
| MBTS (vulcanization accelerator) *3 | 1 | 0 | 0.5 |
| Sulfur | 0 | 4 | 2 |
| Total | 168.0 | 169.0 | 168.5 |

| | | | |
|---|---|---|---|
| Note: *1 trade mark of styrene-butadiene rubber, made by JSR Corporation *2 N-(t-butyl)-2-benzothiazole sulfenamide *3 dibenzothazyl disulfide | | | |

In Example 1 no scorching is observed at the shaping step of each rubber composition, while the scorching is observed at the shaping step of the rubber composition in Comparative Example 1. As a result, it is confirmed that the occurrence of scorching can be prevented by the production method according to the invention.

In the production method of the uncured rubber member according to the invention, the uncured rubber composition to be shaped in the shaping machine is made of a compounding system excluding either the vulcanizing agent or vulcanization accelerator, so that the occurrence of scorching resulted from heat generation due to friction in the shaping can be prevented and production efficiency in the shaping can be largely increased.

## Claims

1. A method of producing an uncured rubber member, wherein a rubber composition A of a compounding system excluding a vulcanizing agent and a rubber composition B of a compounding system excluding a vulcanization accelerator are produced separately, and the rubber composition A and the rubber composition B are shaped into given forms through a shaping machine, respectively, and wound on a rotating support (1), so to contact with each other for producing the uncured rubber member.

2. A method as claimed in claim 1, wherein the shaping machine is an extruder (2a, 2b).

3. A method as claimed in claim 1 or 2, wherein the form of the rubber composition A and/or B after the shaping is any one of sheet, ribbon and string.

4. A method as claimed in any of claims 1 to 3, wherein the rubber composition A and/or B after the shaping is wound in a helical form.

5. A method as claimed in any of claims 1 to 4, wherein the rubber composition A and/or B after the shaping is cooled before the winding on the rotating support.

6. A method as claimed in any of claims 1 to 5, wherein an existing ratio of the rubber composition A and the rubber composition B in the uncured rubber member is properly changed.

7. A method as claimed in any of claims 1 to 5, wherein an existing ratio of the rubber composition A and the rubber composition B in the uncured rubber member is properly changed in a widthwise direction of the support.

## Patentansprüche

1. Verfahren zum Herstellen eines unvulkanisierten Kautschukelements, bei dem eine Kautschukzusammensetzung A eines Mischungssystems ausschließlich eines Vulkanisierungsmittels und eine Kautschukzusammensetzung B eines Mischungssystems ausschließlich eines Vulkanisationsbeschleunigers separat hergestellt werden und die Kautschukzusammensetzung A und die Kautschukzusammensetzung B durch eine Formmaschine jeweils zu bestimmten Gestalten geformt werden und auf einen rotierenden Träger (1) gewickelt werden, damit sie miteinander in Kontakt kommen zum Herstellen des unvulkanisierten Kautschukelements.

2. Verfahren nach Anspruch 1, bei dem die Formmaschine ein Extruder (2a, 2b) ist.

3. Verfahren nach Anspruch 1 oder 2, bei dem die Kautschukzusammensetzung A und/oder B nach dem Formen die Gestalt von Platte, Streifen oder Band hat.

4. Verfahren nach einem der Ansprüche 1 bis 3, bei dem die Kautschukzusammensetzung A und/oder B nach dem Formen spiralförmig gewickelt wird.

5. Verfahren nach einem der Ansprüche 1 bis 4, bei dem die Kautschukzusammensetzung A und/oder B nach dem Formen abgekühlt wird, bevor sie auf den rotierenden Träger aufgewickelt wird.

6. Verfahren nach einem der Ansprüche 1 bis 5, bei dem ein bestehendes Verhältnis der Kautschukzusammensetzung A und der Kautschukzusammensetzung B im unvulkanisierten Kautschukelement ordnungsgemäß geändert wird.

7. Verfahren nach einem der Ansprüche 1 bis 5, bei dem ein bestehendes Verhältnis der Kautschukzusammensetzung A und der Kautschukzusammensetzung B im unvulkanisierten Kautschukelement in einer Querrichtung des Trägers ordnungsgemäß geändert wird.

## Revendications

1. Procédé de production d'un élément de caoutchouc non vulcanisé, dans lequel une composition de caoutchouc A d'un système de mélange ne contenant pas d'agent de vulcanisation et une composition de caoutchouc B d'un système de mélange ne contenant pas d'accélérateur de vulcanisation sont produites séparément, la composition de caoutchouc A et la composition de caoutchouc B étant formées respectivement dans des formes définies par l'intermédiaire d'une machine de formage et enroulées sur un support rotatif (1), de sorte à se contacter afin de produire l'élément de caoutchouc non vulcanisé.

2. Procédé selon la revendication 1, dans lequel la machine de formage est constituée par une extrudeuse (2a, 2b).

3. Procédé selon les revendications 1 ou 2, dans lequel la forme de la composition de caoutchouc A et/ou B après le formage correspond à la forme d'une feuille, d'un ruban ou d'un cordon.

4. Procédé selon l'une quelconque des revendications 1 à 3, dans lequel la composition A et/ou B est enroulée en une forme hélicoïdale après le formage.

5. Procédé selon l'une quelconque des revendications 1 à 4, dans lequel la composition de caoutchouc A et/ou B est refroidie après le formage, avant l'enroulement sur le support rotatif.

6. Procédé selon l'une quelconque des revendications 1 à 5, dans lequel un rapport existant entre la composition de caoutchouc A et la composition de caoutchouc B dans l'élément de caoutchouc non vulcanisé est changé de manière appropriée.

7. Procédé selon l'une quelconque des revendications 1 à 5, dans lequel un rapport existant de la composition de caoutchouc A et de la composition de caoutchouc B dans l'élément de caoutchouc non vulcanisé est changé de manière appropriée dans une direction de la largeur du support.
